(19) Europäisches Patentamt
European Patent Office
Office européen des brevets

(11) **EP 4 148 673 B1**

(12) **EUROPEAN PATENT SPECIFICATION**

(45) Date of publication and mention
of the grant of the patent:
**09.07.2025 Bulletin 2025/28**

(21) Application number: **22188561.9**

(22) Date of filing: **03.08.2022**

(51) International Patent Classification (IPC):
**G06T 7/73** *(2017.01)*          **G06V 10/26** *(2022.01)*
**G06V 10/82** *(2022.01)*          **G06V 20/58** *(2022.01)*

(52) Cooperative Patent Classification (CPC):
**G06T 7/73; G06V 10/26; G06V 10/82; G06V 20/58;**
G06T 2207/20076; G06T 2207/20081;
G06T 2207/20084; G06T 2207/20221;
G06T 2207/30244; G06T 2207/30252

(54) **METHOD AND APPARATUS FOR ESTIMATING POSITION OF MOVING OBJECT BACKGROUND**

VERFAHREN UND VORRICHTUNG ZUR SCHÄTZUNG DER POSITION EINES SICH
BEWEGENDEN OBJEKTS

PROCÉDÉ ET APPAREIL PERMETTANT D'ESTIMER LA POSITION DE L'ARRIÈRE-PLAN D'UN
OBJET MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.09.2021 KR 20210121201
09.11.2021 KR 20210152830**

(43) Date of publication of application:
**15.03.2023 Bulletin 2023/11**

(73) Proprietor: **Samsung Electronics Co., Ltd.**
**Suwon-si 16677 (KR)**

(72) Inventors:
• **PARK, Yonggonjong**
**16678 Suwon-si (KR)**
• **PARK, Heewon**
**16678 Suwon-si (KR)**
• **JANG, CHEOLHUN**
**16678 Suwon-si (KR)**

(74) Representative: **Arnold & Siedsma**
**Bezuidenhoutseweg 57**
**2594 AC The Hague (NL)**

(56) References cited:
**US-B2- 10 546 387**

• **CHENGCHENG GUO ET AL: "Coarse-to-fine
Semantic Localization with HD Map for
Autonomous Driving in Structural Scenes",
ARXIV.ORG, CORNELL UNIVERSITY LIBRARY,
201 OLIN LIBRARY CORNELL UNIVERSITY
ITHACA, NY 14853, 6 July 2021 (2021-07-06),
XP091008497**
• **XIAO ZHONGYANG ET AL: "Multimedia Fusion at
Semantic Level in Vehicle Cooperactive
Perception", 2018 IEEE INTERNATIONAL
CONFERENCE ON MULTIMEDIA & EXPO
WORKSHOPS (ICMEW), IEEE, 23 July 2018
(2018-07-23), pages 1 - 6, XP033453580, DOI:
10.1109/ICMEW.2018.8551565**

# EP 4 148 673 B1

**Description**

BACKGROUND

1. Field

The following description relates to a method and apparatus for estimating a position of a moving object.

2. Description of Related Art

Autonomous driving refers to driving to a destination without the intervention of a driver by recognizing surrounding environment, determining driving situation, and controlling a vehicle. With the recent use of vehicles and small-sized mobility devices such as mobile robots for smart delivery and security, the demand for autonomous vehicles or moving objects supporting advanced driver-assistance systems (ADAS) is increasing.

Estimating the position of the vehicle that is being driven is important for success in autonomous driving, and various techniques may be used to estimate the position. For example, a map may be generated in advance using a device such as a LiDAR or a camera and a position on the map may be estimated using sensor data measured during driving. In another method, satellite signals are received using a precise global positioning system (GPS) device and an absolute position is estimated.

US 10,546,387 B2 discloses a method which determines a pose of an image capture device. The method includes accessing an image of a scene captured by the image capture device. A semantic segmentation of the image is performed, to generate a segmented image. An initial pose of the image capture device is generated using a three-dimensional (3D) tracker. A plurality of 3D renderings of the scene are generated, each of the plurality of 3D renderings corresponding to one of a plurality of poses chosen based on the initial pose. A pose is selected from the plurality of poses, such that the 3D rendering corresponding to the selected pose aligns with the segmented image.

Chengcheng Guo et al., "Coarse-to-fine Semantic Localization with HD Map for Autonomous Driving in Structural Scenes", arXiv:2107.02557v1, discloses a cost-effective vehicle localization system with HD map for autonomous driving that uses cameras as primary sensors. To this end, vision-based localization is formulated as a data association problem that maps visual semantics to landmarks in HD map. Specifically, system initialization is finished in a coarse to fine manner by combining coarse GPS measurement and fine pose searching. In tracking stage, vehicle pose is refined by implicitly aligning the semantic segmentation result between image and landmarks in HD maps with photometric consistency. Vehicle pose is then computed by pose graph optimization in a sliding window fashion.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect of the invention, there is provided a processor-implemented method of operating an electronic device according to claim 1. Preferred embodiments are recited in dependent claims 2-5.

In another general aspect which is not covered by the invention, there is provided a method of estimating a position of a moving object based on a particle filter, the method including generating two-dimensional (2D) feature point information in a landmark-based probability map from a surrounding image acquired by a capturing device mounted on a moving object, obtaining landmark-based three-dimensional (3D) feature point information from high-definition (HD) map data of a vicinity of the moving object, predicting positions of particles corresponding to candidate positions of the moving object, projecting, for each of the positions of the particles, the 3D feature point information onto the probability map obtained from the surrounding image, determining, for each of the positions of the particles, a similarity between the 3D feature point information projected onto the probability map and the 2D feature point information of the probability map, and estimating a position of the moving object by rearranging the particles based on the similarity.

The 2D feature point information may be obtained according to a landmark, based on deep neural network (DNN)-based semantic segmentation.

The obtaining of the 3D feature point information from the HD map data of the vicinity of the moving object may include receiving 3D feature point information on a global domain for a landmark in the vicinity of the moving object from a HD map database based on position information of the moving object, and converting the 3D feature point information on the global domain to a local domain for the capturing device.

The predicting of the positions of the particles may include predicting the positions of the particles based on position information of particles rearranged at a previous point in time and a displacement of the moving object from the previous point in time.

The 3D feature point information may be projected onto a 2D probability map obtained from the surrounding image based on perspective mapping.

The determining of the similarity between the 3D feature point information projected onto the probability map and the 2D feature point information of the probability map may include summing probabilities of the projected 3D feature point information corresponding to each landmark, in the probability map, and multiplying summed probabilities corresponding to respective landmarks.

The estimating of the position of the moving object by rearranging the particles based on the similarity may include setting weights for the respective positions of the particles according to the similarity, rearranging the particles according to the weights, and estimating the position of the moving object by calculating a mean value of the rearranged particles.

The moving object may be an autonomous vehicle or a vehicle supporting advanced driver-assistance systems (ADAS).

In another general aspect of the invention, there is provided an electronic device according to claim 7. Preferred embodiments are recited in dependent claims 8-10.

Other features and aspects will be apparent from the following detailed description, the drawings, and the claims.

BRIEF DESCRIPTION OF THE DRAWINGS

FIGS. 1A to 1C illustrate examples of obtaining feature point information of a vicinity of a moving object.
FIG. 2 illustrates an example of an electronic device.
FIG. 3A and 3B illustrate examples of calculating a similarity between a feature point in a high-definition (HD) map and a feature point in a surrounding image.
FIGS. 4A and 4B illustrate examples of determining a similarity differently according to a candidate position of a moving object.
FIG. 5 illustrates an example of an operating method of an electronic device.
FIG. 6 illustrates an example of calculating a similarity.
FIG. 7 illustrates an example of a method of estimating a position of a moving object based on a particle filter.
FIG. 8 illustrates an example of estimating a position of a moving object based on a similarity.
FIG. 9 illustrates an example of a system for estimating a position of a moving object.
FIG. 10 illustrates an example of a system for estimating a position of a moving object.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Although terms such as "first," "second," and "third", A, B, C, (a), (b), (c), or the like may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in the examples described herein may also be referred to as a second member, component, region, layer, or section without departing from the teachings of the examples.

It should be noted that if it is described that one component is "connected", "coupled", or "joined" to another component, a third component may be "connected", "coupled", and "joined" between the first and second components, although the first component may be directly connected, coupled, or joined to the second component. On the contrary, it should be noted that if it is described that one component is "directly connected", "directly coupled", or "directly joined" to another component, a third component may be absent. Expressions describing a relationship between components, for example, "between", directly between", or "directly neighboring", etc., should be interpreted to be alike.

The singular forms "a", "an", and "the" are intended to include the plural forms as well, unless the context clearly indicates otherwise. It should be further understood that the terms "comprises" and/or "comprising," when used in this specification, specify the presence of stated features, integers, steps, operations, elements, components or a combination thereof, but do not preclude the presence or addition of one or more other features, integers, steps, operations, elements, components, and/or groups thereof.

Unless otherwise defined, all terms used herein including technical or scientific terms have the same meaning as commonly understood by one of ordinary skill in the art to which examples belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

The use of the term "may" herein with respect to an example or embodiment (e.g., as to what an example or embodiment may include or implement) means that at least one example or embodiment exists where such a feature is included or implemented, while all examples are not limited thereto.

The examples may be implemented as various types of products, such as, for example, a personal computer (PC), a laptop computer, a tablet computer, a smartphone, a television (TV), a smart home appliance, an intelligent vehicle, a kiosk, a navigation device, a vehicle, an automated vehicle, and a wearable device. Hereinafter, examples will be described in detail with reference to the accompanying drawings. In the drawings, like reference numerals are used for like elements.

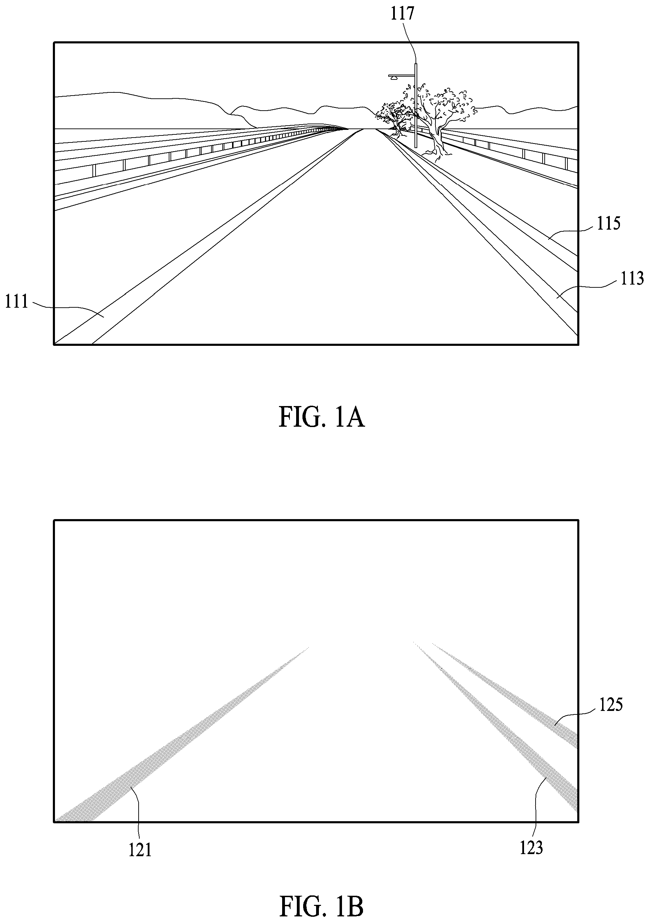

FIGS. 1A to 1C illustrate examples of obtaining feature point information of a vicinity of a moving object.

FIG. 1A illustrates an example of an image acquired by capturing a vicinity of a moving object.

Referring to FIG. 1A, an image acquired by capturing a view ahead of a moving object may include various objects serving as references (hereinafter, landmarks). For example, in FIG. 1A, objects corresponding to a yellow lane line (or a center line) 111, a white lane line 113, a curb 115, a streetlight 117, and the like may be included. An image as in FIG. 1A may be acquired through a capturing device mounted on a moving object. The capturing device may be a monocular camera, a stereo vision camera, or the like, and the capturing device may include an image sensor. The image sensor may be a semiconductor that converts light entering through a lens of the capturing device into an electrical signal, and may be a color image sensor, a red, green, blue (RGB) sensor, or an infrared (IR) sensor.

FIG. 1B illustrates an example of feature point information extracted from an image of a vicinity of a moving object.

FIG. 1B may be a landmark-based probability map obtained based on an image of a vicinity of a moving object (hereinafter, also referred to as a surrounding image of a moving object) acquired through a capturing device as in FIG. 1A. Referring to FIG. 1B, feature point information 121, 123, and 125 divided by landmarks may be obtained from the landmark-based probability map.

For example, the feature point information 121 may correspond to the yellow lane line 111, the feature point information 123 may correspond to the white lane line 113, and the feature point information 125 may correspond to the curb 115, in the image of FIG. 1A. Feature point information of a surrounding image may be obtained according to landmarks based on deep neural network (DNN)-based semantic segmentation.

According to an example, the surrounding image of the moving object, acquired through the capturing device as in FIG. 1A, may be input to a learning model for DNN-based semantic segmentation, and feature point information divided by landmarks may be extracted based on the learning model. The feature point information extracted from the surrounding image acquired by the capturing device is expressed in the form of a plane that is a set of pixels on a two-dimensional (2D) probability map.

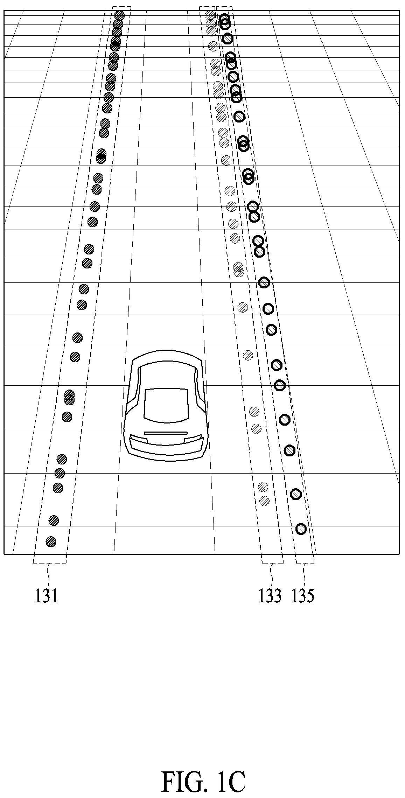

FIG. 1C illustrates an example of feature point information extracted from high-definition (HD) map data of a vicinity of a moving object.

Referring to FIG. 1C, feature point information 131, 133, and 135 divided by landmarks is obtained from HD map data of a vicinity of a moving object. For example, the feature point information 131 may correspond to a yellow lane line (e.g., the yellow lane line 111 of FIG. 1A) in the vicinity of the moving object, the feature point information 133 may correspond to a white lane line (e.g., the while line 113 of FIG. 1A) in the vicinity of the moving object, and the feature point information 135 may correspond to a curb (e.g., the curb 115 of FIG. 1A) in the vicinity of the moving object.

The feature point information obtained from the HD map data is three-dimensional (3D) coordinates in space and is divided by landmarks. For example, referring to FIG. 1C, the feature point information 131 may include information on features points corresponding to the yellow lane line, the feature point information 133 may include information on features points corresponding to the white lane line, and the feature point information 135 may include information on features points corresponding to the curb. The feature point information obtained from the HD map data may be expressed in the form of 3D coordinates.

According to the invention, global domain information on landmarks in the vicinity of the moving object is transmitted from a HD map database to an electronic device for estimating a position of a moving object, according to position information of the moving object. The global domain information is converted into local domain information on a capturing device.

To estimate the position of the moving object, a process of comparing feature point information (e.g., the feature point information 121 of FIG. 1B) obtained from an image (e.g., FIG. 1A) and feature point information (e.g., the feature point information 131 of FIG. 1C) obtained from HD map data (e.g., FIG. 1C) may be needed.

According to an example, when an extended Kalman filter (EKF) is used for estimating the position of the moving object, information on an error between position information predicted based on previous position information and position information measured by a sensor may be needed, and to calculate the error a degree of similarity (hereinafter, a similarity) (or, likelihood) between the two information may be needed. For example, the feature point information 121 of FIG. 1B may correspond to the position information measured by the sensor, and the feature point information 131 of FIG. 1C may correspond to the predicted position information.

As described above with reference to FIGS. 1A to 1C, the feature point information obtained from the image acquired by the capturing device, such as the feature point information 121 of FIG. 1B, may be 2D information, and the feature point information obtained from the HD map data, such as the feature point information 131 of FIG. 1C, may be 3D information. In this case, the dimension mismatch between the two feature point information may make it difficult to calculate a similarity therebetween.

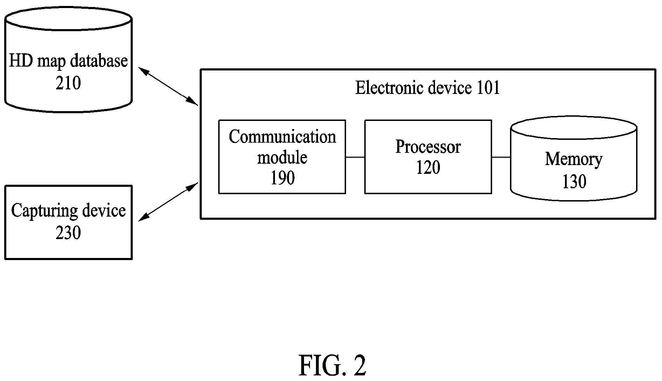

Hereinafter, a method of calculating a similarity (or likelihood) between 2D feature point information obtained from an input image, described with reference to FIG. 1B, and 3D feature point information obtained from a HD map, described with reference to FIG. 1C, will be described in detail with reference to FIGS. 2 to 10.

FIG. 2 illustrates an example of an electronic device.

Referring to FIG. 2, an electronic device 101 may include a communication module 190 for communicating with a HD map database 210 on a vicinity of a moving object and with a capturing device 230, a memory 130 storing computer-executable instructions, and a processor 120 for executing the instructions by accessing the memory 130.

The electronic device 101 may be mounted on a moving object whose position is to be estimated, or included in the moving object, or positioned separately from the moving object.

The electronic device 101 may estimate a position of the moving object. In an example, the moving object refers to any mode of transportation, delivery, or communication such as, for example, for example, an automobile, a truck, a tractor, a scooter, a motorcycle, a cycle, an amphibious vehicle, a snowmobile, a boat, a public transit vehicle, a bus, a monorail, a train, a tram, an autonomous vehicle, an unmanned aerial vehicle, a bicycle, a drone, and a flying object such as an airplane. The moving object may be an autonomous vehicle or a vehicle supporting advanced driver-assistance systems (ADAS).

The memory 130 may store a variety of data used by components (e.g., the processor 120) of the electronic device 101. A variety of data may include, for example, computer-readable instructions and input data or output data for an operation related thereto. The memory 130 may include any one or any combination of a volatile memory and a non-volatile memory.

The volatile memory device may be implemented as a dynamic random-access memory (DRAM), a static random-access memory (SRAM), a thyristor RAM (T-RAM), a zero capacitor RAM (Z-RAM), or a twin transistor RAM (TTRAM).

The non-volatile memory device may be implemented as an electrically erasable programmable read-only memory (EEPROM), a flash memory, a magnetic RAM (MRAM), a spin-transfer torque (STT)-MRAM, a conductive bridging RAM(CBRAM), a ferroelectric RAM (FeRAM), a phase change RAM (PRAM), a resistive RAM (RRAM), a nanotube RRAM, a polymer RAM (PoRAM), a nano floating gate Memory (NFGM), a holographic memory, a molecular electronic memory device), or an insulator resistance change memory. Further details regarding the memory 130 is provided below.

The processor 120 may control an overall operation of the electronic device 101 and may execute corresponding processor-readable instructions for performing operations of the electronic device 101. The processor 120 may execute, for example, software, to control one or more hardware components, such as other components described below in FIG. 2, of the electronic device 101 connected to the processor 120 and may perform various data processing or operations, and control of such components.

In an example, as at least a part of data processing or operations, the processor 120 may store instructions or data in the memory 130, execute the instructions and/or process data stored in the memory 130, and store resulting data obtained therefrom in the memory 130. The processor 120 may be a data processing device implemented by hardware including a circuit having a physical structure to perform desired operations. For example, the desired operations may include code or instructions included in a program.

The hardware-implemented data processing device may include, for example, a main processor (e.g., a central processing unit (CPU), a field-programmable gate array (FPGA), or an application processor (AP)) or an auxiliary processor (e.g., a GPU, a neural processing unit (NPU), an image signal processor (ISP), a sensor hub processor, or a communication processor (CP)) that is operable independently of, or in conjunction with the main processor. Further details regarding the processor 120 is provided below.

As described above with reference to FIG. 1B, the capturing device 230 may be a monocular camera, a stereo vision camera, or the like, and may include an image sensor. Although FIG. 2 shows the capturing device 230 for ease of description, the capturing device 230 may be an external electronic device or server that stores surrounding images of the moving object captured through the capturing device 230.

The HD map database 210 may be a database including HD map (HD map) information, and may transmit HD map information on the vicinity of the moving object to the electronic device 101 through the communication module 190 in response to a request from the electronic device 101. As described with reference to FIG. 1C, a high-precision map may include 3D feature points divided according to landmarks.

The communication module 190 may support establishing a direct (e.g., wired) communication channel or wireless communication channel between the electronic device 101 and an external electronic device (or server) and performing communication through the established communication channel. The communication module 190 may include one or more communication processors that operate independently of the processor 120 (e.g., an application processor) and support direct (e.g., wired) communication or wireless communication. According to an example, the communication module 190 may include a wireless communication module (e.g., a cellular communication module, a short-range wireless communication module, or a global navigation satellite system (GNSS) communication module) or a wired communication module (e.g., a local area network (LAN) communication module, or a power line communication (PLC) module). A corresponding one of these communication modules may communicate with the external electronic device via a short-range communication network (e.g., Bluetooth™, wireless-fidelity (Wi-Fi) direct, or infrared data association (IrDA)) or a long-range communication network (e.g., a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multi components (e.g., multi chips) separate from each other.

The wireless communication module may support a 5G network after a 4G network, and a next-generation communication technology, e.g., a new radio (NR) access technology. The NR access technology may support enhanced mobile broadband (eMBB), massive machine type communications (mMTC), or ultra-reliable and low-latency communications (URLLC). The wireless communication module may support a high-frequency band (e.g., a mmWave band) to achieve, e.g., a high data transmission rate. The wireless communication module may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module may support various requirements specified in the electronic device 101, the external electronic device, or a network system. According to an example, the wireless communication module may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

A method of the communication module 190 communicating with the capturing device 230 to obtain 2D feature point information may be the same as or different from a method of the communication module 190 communicating with the HD map database 210 to obtain 3D feature point information.

According to the invention, the processor 120 obtains 2D feature point information in the form of a landmark-based probability map from a surrounding image acquired by the capturing device 230 mounted on the moving object. As described above with reference to FIG. 1B, the processor 120 may receive the surrounding image of the moving object from the capturing device 230 or an external electronic device or server storing images, and obtain 2D feature point information by landmarks based on DNN-based semantic segmentation.

According to another example, a process of extracting the 2D feature point information from the surrounding image of the moving object may be performed by the external electronic device or server, and the processor 120 may receive the extracted 2D feature point information in the form of a landmark-based probability map.

According to an example, the processor 120 may obtain landmark-based 3D feature point information in a HD map of the vicinity of the moving object. As described above with reference to FIG. 1C, the processor 120 may request the 3D feature point information from the HD map database 210 based on the position information of the moving object, and obtain the 3D feature point information of the HD map of the vicinity of the moving object.

According to the invention, feature point information stored in the HD map database 210 may be coordinates in a global domain, and the processor 120 converts feature point information on landmarks in the vicinity of the moving object, received from the HD map database 210, into a local domain for the capturing device. The process of conversion from the global domain to the local domain will be described in detail with reference to Equation 1 below.

According to another example, the conversion from the global domain to the local domain may be performed by the external electronic device or server, and the 3D feature point information in the form of a local domain may be transmitted to the processor 120.

To calculate the similarity between the 2D feature point information and the 3D feature point information, the processor 120 may convert the dimension of one of the 2D feature point information of the surrounding image and the 3D feature point information of the HD map data into the other dimension.

According to the invention, the processor 120 projects the 3D feature point information of the HD map data onto a 2D probability map obtained from the surrounding image based on perspective mapping. The 3D feature point information of the HD map data may be projected onto the 2D probability map obtained from the surrounding image based on Equation 1 and Equation 2 below.

According to an example, based on Equation 1, the 3D feature point information of the HD map data may be converted into a local domain which is based on the capturing device on the global domain. This may correspond to the operation of conversion from the global domain to the local domain described above in relation to the HD map database 210.

[Equation 1]

$$\begin{bmatrix} X & Y & Z \end{bmatrix}^T = \mathbf{R}_v^c \mathbf{R}_w^v \left( \mathbf{p}_{lm}^w - \mathbf{p}^w \right) + \mathbf{t}_v^c$$

$\mathbf{p}_{lm}^w$ denotes coordinates of 3D feature point information on the global domain of the HD map data. For example, $\mathbf{p}_{lm}^w$ may be coordinates of one of the by-landmark feature points 131, 133, and 135 of FIG. 1C. $\mathbf{p}^w$ may be 3D coordinates of the moving object on the global domain of the HD map data. For example, $\mathbf{p}^w$ may be 3D coordinates of the vehicle of FIG. 1C on the global domain. $\mathbf{R}_w^v$ may be a rotation transformation matrix of the moving object to the global domain. $\mathbf{R}_v^c$ may be a rotation transformation matrix of the capturing device 230 to the moving object. $\mathbf{t}_v^c$ may be a relative distance of the capturing device 230 to the moving object. Based on Equation 1, components $X, Y, Z$ of the 3D feature point information on the local domain with respect to the capturing device 230 may be obtained.

According to an example, based on Equation 2, the 3D feature point information converted into the local domain with respect to the capturing device may be projected onto a 2D probability map.

[Equation 2]

$$\mathbf{p}^c = \begin{bmatrix} u & v \end{bmatrix}^T = \begin{bmatrix} f_x \dfrac{X}{Z} + u_0 & f_y \dfrac{Y}{Z} + v_0 \end{bmatrix}^T$$

Based on Equation 2 above, the 3D feature point information $X, Y, Z$ obtained by Equation 1 above may be projected onto the 2D probability map, and 2D coordinates $\mathbf{p}^c = [u\ v]^T$ may be obtained. fx and fy may be a horizontal focal length and a vertical focal length of the capturing device, respectively. $u_0$ and $v_0$ may represent a principal point coordinates.

As another example which is not covered by the invention, the processor 120 may convert the 2D feature point information of the surrounding image to the form of a 3D probability map based on inverse perspective mapping. Depth information may be required for conversion from 2D into 3D. Thus, in this case, the capturing device 230 may be a stereo vision camera.

According to the invention, the processor 120 matches the dimensions of the two feature point information and then, calculates a similarity between the feature point information, and estimates the position of the moving object based on the similarity. The processor 120 sums probabilities of the feature point information of the HD map data corresponding to each landmark, in the probability map obtained from the surrounding image, and calculates the similarity by multiplying summed probabilities.

According to the invention, in response to matching the dimensions to 2D as described above, probabilities corresponding to projected 2D coordinates when the 3D feature point information is projected onto the 2D probability map are summed for each landmark, and a similarity is calculated by multiplying summed probabilities. As another example which is not covered by the invention, in response to matching the dimensions to 3D, the 2D probability map may be converted to the form of a 3D probability map according to inverse perspective mapping. Probabilities of correspondence of the 3D feature point information on the converted 3D probability map may be summed for each landmark, and a similarity may be calculated by multiplying summed probabilities.

The processor 120 may estimate the position of the moving object or update an estimation result according to a particle filter or a maximum likelihood (ML) optimization scheme, based on the calculated similarity.

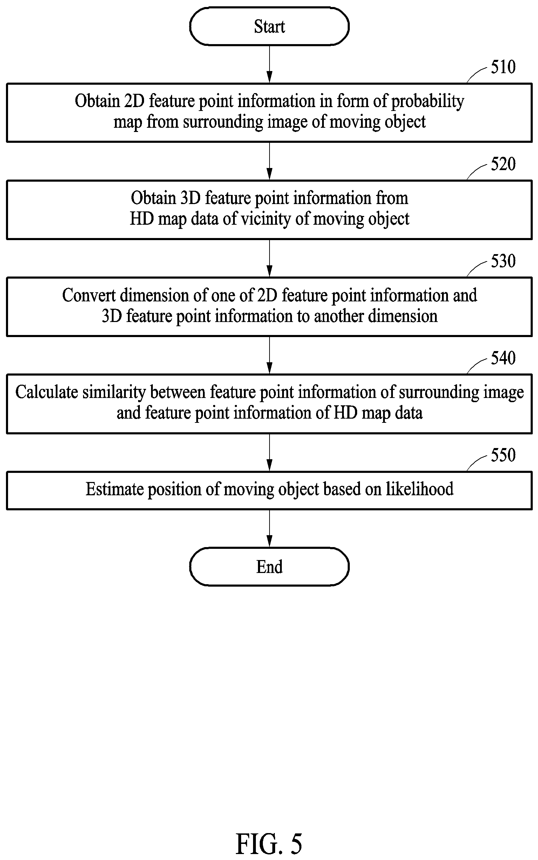

Various examples of calculating the similarity and estimating the position of the moving object based on the similarity by the processor 120 will be described in detail with reference to FIGS. 5 to 9.

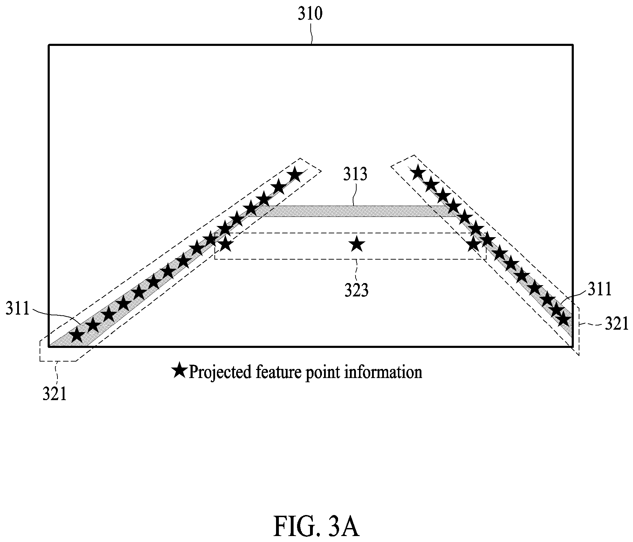

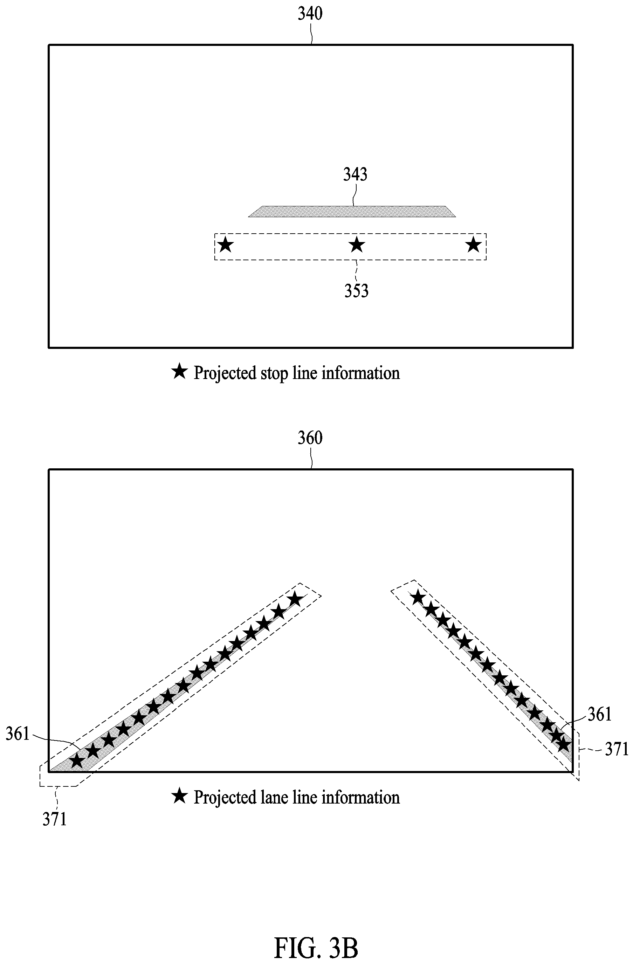

FIG. 3A and 3B illustrate examples of calculating a similarity between a feature point in a high-definition (HD) map and a feature point in a surrounding image.

As described above with reference to FIG. 2, the processor 120 of the electronic device 101 matches the dimensions between two feature points and calculates a similarity by summing probabilities of correspondence for each landmark and multiplying summed probabilities.

FIG. 3A shows an example of determining similarities by summing probabilities without dividing by landmarks, and FIG. 3B shows an example of determining similarities by multiplying probabilities with dividing by landmarks.

The dimensions may be matched to 3D as described above with reference to FIG. 2. However, for ease of description, examples of calculating a similarity by matching the dimensions to 2D will be described with reference to FIGS. 3A and 3B.

FIG. 3A illustrates an example of a situation 310 in which pieces of 3D feature point information are projected onto a landmark-based 2D probability map.

As described above with reference to FIG. 2, Equation 1, and Equation 2, 3D feature points are projected onto a 2D probability map based on perspective mapping. The situation 310 may be an example of projecting 3D feature point information onto a 2D probability map obtained from a surrounding image of a moving object, acquired by a capturing device, like the 2D probability map described with reference to FIG. 1B.

Referring to FIG. 3A, 2D feature point information on the 2D probability map and the projected 3D feature point information is shown. For example, 2D feature point information 311 may correspond to lane lines in a front-view image of a moving object, and 2D feature point information 313 may correspond to a stop line in the front-view image of the moving object. It may be learned that as a result of projecting 3D feature points, projected 3D feature point information 321 considerably corresponds to the 2D feature point information 311 in the case of the lane lines, whereas projected 3D feature point information 323 does not correspond to the 2D feature point information 313 in the case of the stop line.

Calculating a similarity by simply summing probabilities of corresponding to projected 3D feature points, without calculating a similarity with dividing by landmarks, may drop the accuracy of the similarity. For example, since the stop line has no match at all, but the lane lines having a relatively greater number of feature points have good match, a relatively high overall similarity may be calculated.

According to the invention, the processor 120 of the electronic device 101 calculates the similarity by summing probabilities for each landmark and multiplying summed probabilities, whereby the accuracy of the similarity may improve. The process of calculating the similarity by dividing according to landmarks, as in the processor 120 of the electronic device 101, will be described in detail with reference to FIG. 3B.

Referring to FIG. 3B, a situation 340, 360 in which pieces of 3D feature point information are projected onto a landmark-based 2D probability map are shown for each landmark.

The situations 340 and 360 of FIG. 3B are only provided to describe the process of calculating a similarity by dividing by landmarks. Since the examples of FIGS. 3A and 3B differ only in the method of calculating a similarity under the same situation, the processor 120 may calculate the similarity based on a single probability map as in the situation 310 of FIG. 3A in the actual calculation process.

Referring to the situation 340 of FIG. 3B, among landmarks such as lane lines and a stop line, 2D feature point information of the stop line and projected 3D feature point information of the stop line are shown on a 2D probability map. For example, 2D feature point information 343 may correspond to a stop line in a 2D probability map obtained from an front-view image of a moving object, and 3D feature point information 353, corresponding to the stop line, projected onto the 2D probability map is shown. Referring to the situation 340 of FIG. 3B, it may be learned that the 3D feature point information 353 projected onto the 2D probability map does not correspond to the 2D feature point information 343 at all.

Referring to the situation 360 of FIG. 3B, 2D feature point information of the lane lines and projected 3D feature point information of the lane lines are shown on the 2D probability map. For example, 2D feature point information 361 may correspond to lane lines in the 2D probability map obtained from the front-view image of the moving object, and 3D feature point information 371, corresponding to the lane lines, projected onto the 2D probability map is shown. Referring to the situation 360 of FIG. 3B, it may be learned that the 3D feature point information 371 projected onto the 2D probability map corresponds to the 2D feature point information 361 well.

The processor 120 of the electronic device 101 sums, for each of the landmarks, probabilities of correspondence of the projected 3D feature points on the probability map, and calculates a similarity by multiplying summed probabilities for the respective landmarks. Referring to the situation 340 of FIG. 3B, for the stop line which is a landmark, all the three feature points projected onto the probability map do not correspond to the 2D feature point information 343 at all. Thus, the sum of probabilities corresponding to the three feature points, calculated by the processor 120, may be close to "0". Referring to the situation 360 of FIG. 3B, for the lane lines which are landmarks, a high value may be derived as the sum of probabilities.

Unlike the description provided with reference to FIG. 3A, the processor 120 calculates the similarity by multiplying summed probabilities for respective landmarks, as shown in FIG. 3B. Through this, when the probability calculated for the stop line is close to "0" even if the probability calculated for the lane lines is high, the similarity calculated by multiplying the two values may be less than the similarity calculated in the example of FIG. 3A.

In another example, the similarity calculated for different types of landmark and feature points may be assigned weights, and the processor 120 may calculate the similarity by multiplying weighted sum of probabilities for respective landmarks.

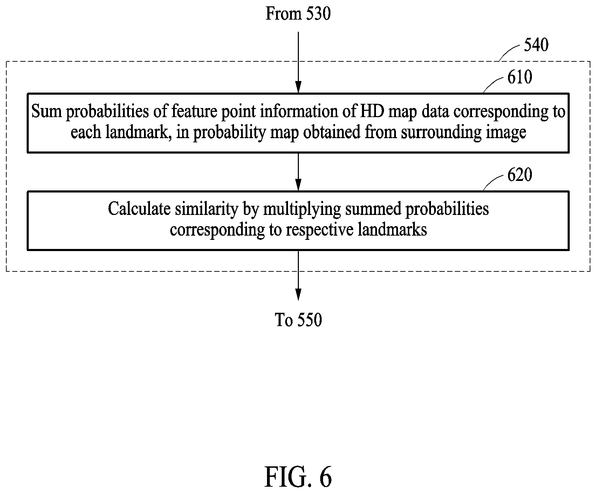

According to an example, the processor 120 may calculate the similarity by dividing by landmarks, thereby calculating a more accurate similarity, which leads to an increase in the uniqueness of similarity. The process of calculating the similarity will be described in further detail with reference to FIG. 6.

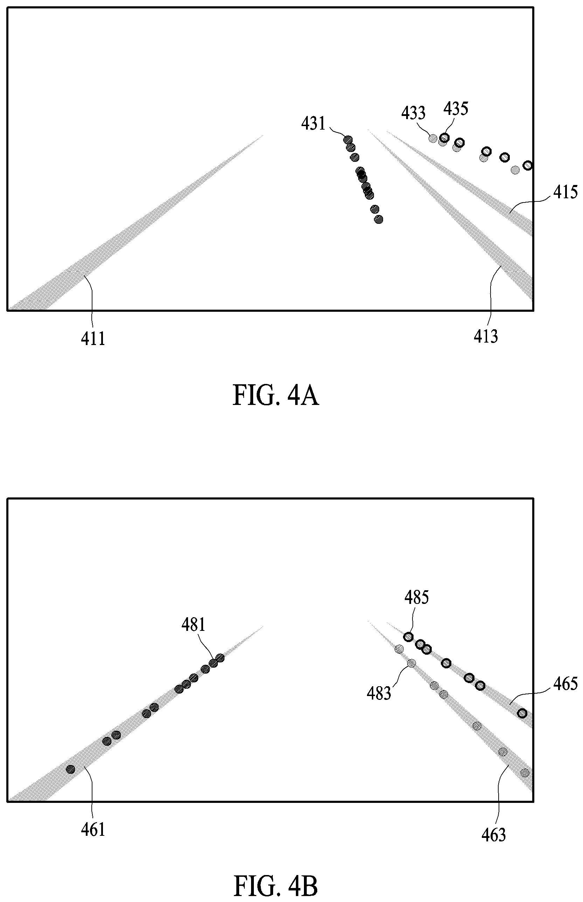

FIGS. 4A and 4B illustrate examples of determining a similarity differently according to a candidate position of a moving object.

Referring to FIGS. 4A and 4B, examples of projecting the 3D information of HD map data of FIG. 1C onto the 2D probability map of FIG. 1B are shown.

The dimensions may be matched to 3D as described above with reference to FIG. 2. However, for ease of description, examples in which the dimensions are matched to 2D will be described with reference to FIGS. 4A and 4B.

Referring to FIG. 4A, 2D feature point information 411 and projected 3D feature point information 431 corresponding to a yellow lane line (or a center line), 2D feature point information 413 and 3D feature point information 433 corresponding to a white lane line, and 2D feature point information 415 and 3D feature point information 435 corresponding to a curb is shown. In this case, a similarity is low. Thus, when the similarity is calculated as described above with reference to FIGS. 2 to 3B, a relatively low similarity may be calculated.

Referring to FIG. 4B, 2D feature point information 461 and projected 3D feature point information 481 corresponding to a yellow lane line (or a center line), 2D feature point information 463 and 3D feature point information 483 corresponding to a white lane line, and 2D feature point information 465 and 3D feature point information 485 corresponding to a curb is shown. In this case, a similarity is relatively high compared to FIG. 4B. Thus, when the similarity is calculated as described above with reference to FIGS. 2 to 3B, a relatively high similarity may be calculated.

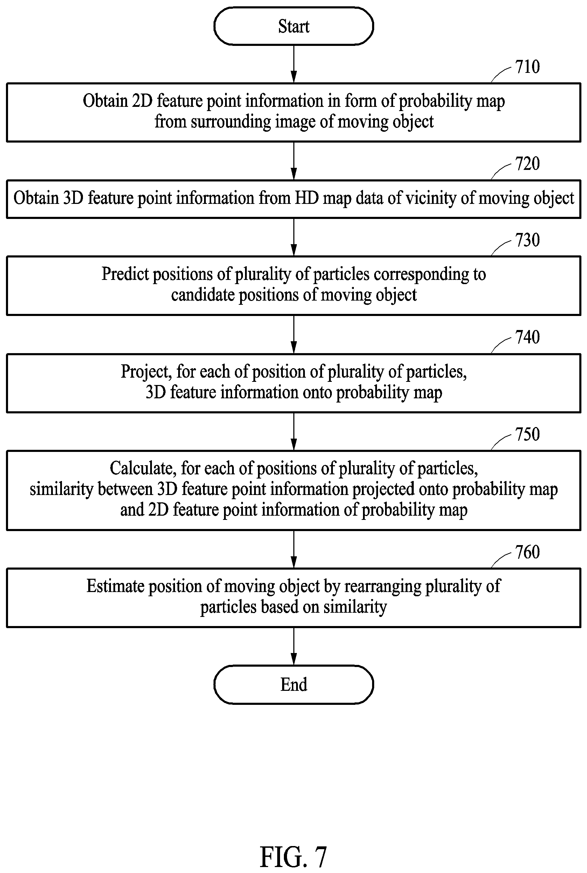

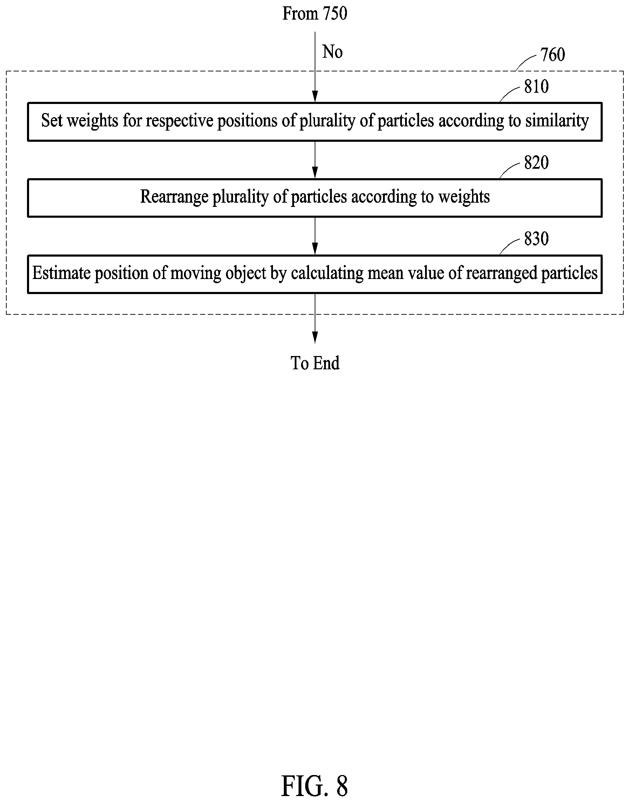

The processor 120 may estimate the position of the moving object based on the similarity. According to an example, the processor 120 may set a higher weight for a candidate position with a relatively high similarity, corresponding to FIG. 4B, than a candidate position with a relatively low similarity, corresponding to FIG. 4A. The processor 120 may update a result of estimating the position of the moving object according to a particle filter or a ML optimization scheme, based on the similarity. An example of estimating the position of the moving object by the processor 120 based on the particle filter will be described in detail with reference to FIGS. 7 and 8.

FIG. 5 illustrates an example of an operating method of an electronic device. The operations in FIG. 5 may be performed in the sequence and manner as shown, although the order of some operations may be changed or some of the operations omitted without departing from the scope of the illustrative examples described. Many of the operations shown in FIG. 5 may be performed in parallel or concurrently. One or more blocks of FIG. 5, and combinations of the blocks, can be implemented by special purpose hardware-based computer, such as a processor, that perform the specified functions, or combinations of special purpose hardware and computer instructions.

For example, operations 510 to 550 may be performed by the processor 120 of the electronic device 101 described above with reference to FIG. 2. In addition to the description of FIG. 5 below, the descriptions of FIGS. 1-4B are also applicable to FIG. 5, and are incorporated herein by reference. Thus, the above description may not be repeated here.

According to the invention, in operation 510, the processor 120 obtains 2D feature point information in the form of a probability map from a surrounding image of a moving object. As described above with reference to FIG. 2, the surrounding image of the moving object may be acquired by the capturing device 230, and the 2D feature point information in the form of the probability map may be obtained based on DNN-based semantic segmentation.

According to the invention, in operation 520, the processor 120 obtains 3D feature point information from HD map data of a vicinity of the moving object. As described above with reference to FIG. 2, the processor 120 requests the HD map data of the vicinity of the moving object from the HD map database 210 based on position information of the moving object, and obtains the 3D feature point information of the HD map data. The processor 120 may convert the 3D feature point information expressed in a global domain to a local domain based on Equation 1 described above.

According to the invention, in operation 530, the processor 120 converts the dimension of the 3D feature point information into another dimension. As described above with reference to FIG. 2, the processor 120 converts the dimension to 2D by projecting 3D feature points onto the 2D probability map based on perspective mapping, or, in another example which is not covered by the invention, may convert the 2D probability map to the form of a 3D probability map based on inverse perspective mapping. As an example, the processor 120 may project the 3D feature points onto the 2D probability map based on Equation 2 described above.

According to the invention, in operation 540, the processor 120 calculates a similarity between the feature point information of the surrounding image and the feature point information of the HD map data. As described above with reference to FIGS. 3A and 3B, in the case where the 3D feature points are projected onto the 2D probability map, the processor 120 sums probabilities corresponding to projected coordinates for each landmark, and calculates the similarity by multiplying summed probabilities. In the case where the 2D probability map is converted into a 3D probability map, the processor 120 may sum probabilities of the 3D feature point information corresponding to coordinates for each landmark, and calculate the similarity by multiplying summed probabilities. The example of calculating the similarity by the processor 120 will be described in detail with reference to FIG. 6.

According to the invention, in operation 550, the processor 120 estimates a position of the moving object based on the similarity. According to an example, as described with reference to FIGS. 4A and 4B, the processor 120 may estimate the position of the moving object by setting different weights predicted positions according to the similarity.

FIG. 6 illustrates an example of calculating a similarity. The operations in FIG. 6 may be performed in the sequence and manner as shown, although the order of some operations may be changed or some of the operations omitted without departing from the scope of the illustrative examples described. Many of the operations shown in FIG. 6 may be performed in parallel or concurrently. One or more blocks of FIG. 6, and combinations of the blocks, can be implemented by special purpose hardware-based computer, such as a processor, that perform the specified functions, or combinations of special purpose hardware and computer instructions. For example, operations 610 and 620 may be performed by the processor 120 of the electronic device 101 described above with reference to FIG. 2. In addition to the description of FIG. 6 below, the descriptions of FIGS. 1-5 are also applicable to FIG. 6, and are incorporated herein by reference. Thus, the above description may not be repeated here.

According to an example, operations 610 and 620 may correspond to the operation of calculating the similarity between the feature point information of the surrounding image and the feature point information of the HD map data described with reference to FIG. 5 (e.g., operation 540 of FIG. 5).

According to the invention, in operation 610, the processor 120 sums probabilities of the feature point information of the HD map data corresponding to each landmark, in the probability map obtained from the surrounding image. As described with reference to FIG. 3B, the processor 120 sums, for each landmark, the probabilities of corresponding to the feature point information of the HD map data on the probability map obtained from the surrounding image.

According to the invention, in operation 620, the processor 120 calculates the similarity by multiplying summed probabilities corresponding to respective landmarks. As described with reference to FIG. 3B, the processor 120 calculates the similarity by multiplying summed probabilities for respective landmarks, thereby obtaining a more accurate similarity.

Operations 610 and 620 of the processor 120 may be expressed by Equation 3 below. Equation 3 may be a similarity calculation method in the case where the 3D feature point information of the HD map is projected onto the 2D probability map based on Equation 1 and Equation 2 described above.

[Equation 3]

$$\mathbf{L} = \prod_{i}^{I} \left( \sum_{m}^{M} P_i \left( \mathbf{p}_{m,i}^{c} \right) \right)$$

$\mathbf{p}^c$ may be the 3D feature point information of the HD map data projected onto the 2D probability map in Equation 2 described above. All coordinates in the 2D probability map may have probabilities of correspondence, which may be probabilities of corresponding to the coordinates in the 2D probability map. As an example, $P_i(\cdot)$ may be a Gaussian blur filter. $m$ may be an index of a feature point. $i$ may be an index of a landmark.

Referring to Equation 3, in operation 610, the processor 120 may sum ($\Sigma$) probabilities of corresponding to all feature points, which are landmarks $i$, for example, feature points with index numbers m to M in Equation 3. Referring to FIG. 3B described above, each of the situations 340 and 360 may an example showing feature points corresponding to a single landmark.

Referring back to Equation 3, in operation 620, the processor 120 may multiply ($\Pi$) summed probabilities of the landmarks i to I. As described above with reference to FIG. 3B, calculating the similarity by dividing by landmarks may increase the uniqueness of similarity

According to an example, the processor 120 may calculate a similarity between feature points with different dimensions through operations 610 to 620.

FIG. 7 illustrates an example of a method of estimating a position of a moving object based on a particle filter which is not covered by the invention. The operations in FIG. 7 may be performed in the sequence and manner as shown, although the order of some operations may be changed or some of the operations omitted without departing from the scope of the illustrative examples described. Many of the operations shown in FIG. 7 may be performed in parallel or concurrently. One or more blocks of FIG. 7, and combinations of the blocks, can be implemented by special purpose hardware-based computer, such as a processor, that perform the specified functions, or combinations of special purpose hardware and computer instructions.

For example, operations 710 to 760 may be performed by the processor 120 of the electronic device 101 described above with reference to FIG. 2. In addition to the description of FIG. 7 below, the descriptions of FIGS. 1-6 are also applicable to FIG. 7, and are incorporated herein by reference. Thus, the above description may not be repeated here.

Operations 710 to 760 may correspond to a method of estimating a position of a moving object by the processor 120 of the electronic device 101 based on a particle filter. Operations 710 to 760 may be detailed operations based on the particle filter, in relation to the operations described above with reference to FIG. 5.

A "particle" is arranged on a digital indoor map and has one or more properties. Each particle preferably has at least two properties, "direction" and "position". Each particle is moved by reflecting a relative movement of a moving object, and is deleted when it is moved to an unreachable position on the digital indoor map. In addition, when the total number of particles falls below a reference value as a result of particle movements, new particles having the same properties as those of the existing particles, except for positions, may be regenerated. The particle-based position estimation method largely includes a process of arranging particles at candidate positions, a process of calculating similarities for respective particles, and a process of rearranging (resampling) the distribution of the particles based on the calculated similarities. Measurement using "particle filtering" may be used based on one of generally available methods without departing from the scope of the illustrative examples described.

Operations 710 and 720 correspond to operations 510 and 520 described with reference to FIG. 5, respectively, and the description provided with reference to FIG. 5 may apply thereto and thus, may not be repeated.

According to an example, in operation 730, the processor 120 may predict positions of a plurality of particles corresponding to candidate positions of the moving object. According to an example, the processor 120 may predict the positions of the plurality of particles corresponding to current candidate positions of the moving object based on position information of particles rearranged at a previous point in time and a displacement of the moving object from the previous point in time up to the present time. In an example, the displacement of the moving object from the previous point in time up to now may be obtained based on wheel speed information.

According to an example, in operation 740, the processor 120 may project, for each of the positions of the plurality of particles, 3D feature point information onto a 2D probability map. That is, there may be a single 2D probability map corresponding to each of the predicted positions of the particles, and 3D feature points of the HD map projected onto the 2D probability map. As an example, FIG. 4A shows a 2D probability map corresponding to a predetermined particle position and 3D feature points projected thereon, and FIG. 4B shows a 2D probability map corresponding to another predetermined particle position and 3D feature points projected thereon. The method of projecting the 3D feature point information onto the 2D probability map by the processor 120 in operation 740 is as described with reference to FIG. 2, Equation1, Equation 2, and operation 530 of FIG. 5 and thus, will not be repeated.

According to an example, in operation 750, the processor 120 may calculate, for each of the positions of the plurality of particles, a similarity between the 3D feature point information projected onto the probability map and the 2D feature point information of the probability map. Operation 750 is as described with reference to FIGS. 3A and 3B, operation 760 of FIG. 5, and Equation 3 and thus, will not be repeated.

According to an example, in operation 760, the processor 120 may estimate a position of the moving object by rearranging the plurality of particles based on the similarity. The detailed operation of estimating the position of the moving object based on the particle filter will be described in detail with reference to FIG. 8.

FIG. 8 illustrates an example of estimating a position of a moving object based on a similarity. The operations in FIG. 8 may be performed in the sequence and manner as shown, although the order of some operations may be changed or some of the operations omitted without departing from the scope of the illustrative examples described. Many of the operations shown in FIG. 8 may be performed in parallel or concurrently. One or more blocks of FIG. 8 and combinations of the blocks, can be implemented by special purpose hardware-based computer, such as a processor, that perform the specified functions, or combinations of special purpose hardware and computer instructions. For example, operations 810 to 830 may be performed by the processor 120 of the electronic device 101 described above with reference to FIG. 2. In addition to the description of FIG. 8 below, the descriptions of FIGS. 1-7 are also applicable to FIG. 8, and are incorporated herein by reference. Thus, the above description may not be repeated here.

According to an example, operations 810 to 840 may correspond to the operation of estimating the position of the moving object based on the particle filter described with reference to FIG. 7 (e.g., operation 760 of FIG. 7).

According to an example, in operation 810, the processor 120 may set weights for the respective positions of the particles according to similarities. As an example, for the positions of two particles corresponding to two candidate positions of the moving object, 2D probability maps and 3D feature points projected thereon may be obtained as shown in FIGS. 4A and 4B, respectively. The processor 120 may set a low weight for a particle with a low similarity as in FIG. 4A, and set a high weight to a particle with a high similarity as in FIG. 4B.

According to an example, in operation 820, the processor 120 may rearrange (resample) the plurality of particles according to the weights. A high weight is set for the position of a particle corresponding to FIG. 4B, of the predicted positions of the plurality of particles. Thus, more particles may be arranged to positions corresponding to FIG. 4B.

According to an example, in operation 830, the processor 120 may estimate the position of the moving object by calculating an average value of the rearranged particles. As an example, the processor 120 may estimate the position of the moving object based on maximum a posteriori (MAP).

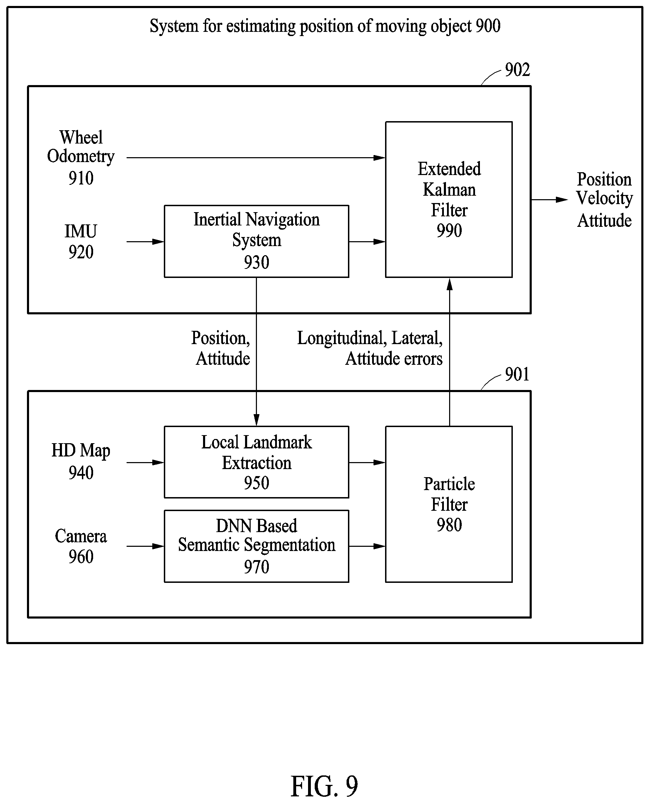

FIG. 9 illustrates an example of a system for estimating a position of a moving object.

FIG. 9 illustrates an example of a system 900 for estimating a position of a moving object (hereinafter, the system 900) including a fusion part 902 based on an extended Kalman filter 990 and a map matching part 901 based on a particle filter 980.

A position estimation method of estimating a position of an autonomous vehicle on a global domain includes a method of utilizing fusion of a GPS and an inertial navigation system (INS) 930. However, the GPS may not guarantee accuracy in a complex urban environment due to multi-path reception and signal interruption caused by high-rise buildings. The system 900 proposes a new position estimation method that fuses an inertial measurement unit (IMU) 920, a wheel odometry 910, and a HD map 940 to eliminate GPS dependency.

The extended Kalman Filter (EKF) 990 of the fusion part 902 is a filter generally used to fuse different sensors having a non-linear relationship, and a system model and a measurement model may be defined to use the extended Kalman filter 990. In the system 900, the system model and the measurement model may be defined based on the wheel odometry 910, the IMU 920, and the position information. The system model predicts state variables and covariance based on a mathematical model, and the predicted state variables and covariance are compensated by a difference between a measurement and a predicted measurement.

However, in the case of a probability map, it may be ambiguous to calculate the difference between the measurement and the predicted measurement. As described above with reference to FIGS. 1 to 8, the processor 120 of the electronic device 101 may calculate the difference between the measurement and the predicted measurement on the probability map by calculating a similarity between the predicted value and the measurement.

As described above with reference to FIGS. 1A to 1C, when an extended Kalman filter (EKF) is used for estimating the position of the moving object, information on an error between position information predicted based on previous position information and position information measured by a sensor may be needed, and to calculate the error, a degree of similarity (hereinafter, a similarity) between the two information may be calculated. For example, the feature point information 121 of FIG. 1B may correspond to the position information measured by the sensor, and the feature point information 131 of FIG. 1C may correspond to the predicted position information.

The operation of the electronic device 101 described with reference to FIGS. 1 to 8 may correspond to the operation of the map matching part 901 in the system 900. The operation of performing DNN-based semantic segmentation 970 on a surrounding image acquired from a camera 960 by the map matching part 901 may correspond to the operation of obtaining 2D feature point information in the form of a landmark-based probability map from the surrounding image acquired from the capturing device 230 by the processor 120 (e.g., operation 510 of FIG. 5 and operation 710 of FIG. 7). Operation 950 of extracting landmarks in a vicinity of the moving object from the HD map 940 by the map matching part 901 may correspond to the operation of receiving HD map data of the vicinity of the moving object from the HD map database 210 and converting the HD map data to a local domain by the processor 120 (e.g., operation 520 of FIG. 5 and operation 720 of FIG. 7). The operation of the particle filter 980 by the map matching part 901 may correspond to the operation of calculating a similarity between a feature point of the HD map and a feature point of the probability map based on particles and estimating the position of the moving object by the processor 120 (e.g., operations 730 to 760 of FIG. 7).

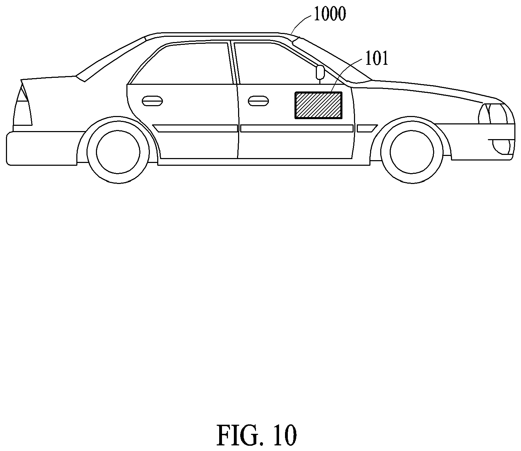

FIG. 10 illustrates an example of a vehicle with an electronic device mounted therein.

Referring to FIG. 10, a vehicle 1000 including the electronic device 101 described above with reference to FIGS. 1 to 9 is shown. The vehicle 1000 may drive in an autonomous mode according to a recognized driving environment even when little or no inputs are provided from a driver. The driving environment may be recognized through one or more sensors attached or installed in the vehicle 1000. For example, the one or more sensors may include a camera, LiDAR, RADAR, and voice recognition sensors. The sensors may include any of the sensors described above, but are not limited thereto. The driving environment may include a road, a condition of the road, a type of lane line, the presence or absence of a nearby vehicle, a distance to a nearby vehicle, weather, the presence or absence of an obstacle, and the like, and is not limited thereto.

The vehicle 1000 recognizes the driving environment and generates an autonomous driving route appropriate for the driving environment. The autonomous vehicle controls internal and external mechanical elements to follow the autonomous driving route. The vehicle 1000 may periodically generate an autonomous driving route.

According to another aspect, the vehicle 1000 may assist a driver with driving using advanced driver-assistance systems (ADAS). ADAS may include an automatic emergency braking system (AEB) that in case of detecting a risk of collision, automatically reduces the speed or stops the vehicle even when the driver does not step on the brake, a lane keep assist system (LKAS) that steers the vehicle to keep its lane when the vehicle moves out of the lane, an advanced smart cruise control (ASCC) that automatically controls the vehicle to maintain a distance to vehicles ahead or to drive at a predetermined speed, an active blind spot detection (ABSD) that detects a risk of collision in a blind spot and thereby helps the driver to change lanes safely, and an around view monitor (AVM) that visually displays the surrounding circumstances of the vehicle.

The electronic device 101 included in the vehicle 1000 may control the mechanical devices of the vehicle 1000 to autonomously drive or assist the driver with driving, and may be used for an ECU, VCU, and various types of controllers or sensors other than the described example.

According to an example, the electronic device 101 described with reference to FIGS. 1 to 9 may be included in an autonomous vehicle or the vehicle 1000 supporting ADAS, and the electronic device 101 may estimate the position of the vehicle 1000.

In the examples described above, the memory 130 may store a variety of information generated in the processing process of the processor 120 described above. In addition, the memory 130 may store a variety of data and programs. The memory 130 may include a high-capacity storage medium such as a hard disk to store a variety of data.

The processor 120 may execute a program and control the electronic device. Program code to be executed by the processor may be stored in the memory.

The electronic device 101, the capturing device 230, the communication module 190, system 900, the fusion part 902, the map matching part 901, the particle filter 980, the DNN-based semantic segmentation 970, and other apparatuses, devices, units, modules, and components described herein are implemented by hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, multiple-instruction multiple-data (MIMD) multiprocessing, a controller and an arithmetic logic unit (ALU), a DSP, a microcomputer, an application-specific integrated circuit (ASIC), a field programmable gate array (FPGA), a programmable logic unit (PLU), a central processing unit (CPU), a graphics processing unit (GPU), a neural processing unit (NPU), or any other device capable of responding to and executing instructions in a defined manner.

The methods that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

The Instructions or software to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In one example, the instructions or software include machine code that is directly executed by the processor or computer, such as machine code produced by a compiler. In an example, the instructions or software includes at least one of an applet, a dynamic link library (DLL), middleware, firmware, a device driver, an application program storing the method of operating an electronic device. In another example, the instructions or software include higher-level code that is executed by the processor or computer using an interpreter. Programmers of ordinary skill in the art can readily write the instructions or software based on the block diagrams and the flow charts illustrated in the drawings and the corresponding descriptions in the specification, which disclose algorithms for performing the operations performed by the hardware components and the methods as described above.

The instructions or software to control a processor or computer to implement the hardware components and perform the methods as described above, and any associated data, data files, and data structures, are recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), magnetic RAM (MRAM), spin-transfer torque(STT)-MRAM, static random-access memory (SRAM), thyristor RAM (T-RAM), zero capacitor RAM (Z-RAM), twin transistor RAM (TTRAM), conductive bridging RAM(CBRAM), ferroelectric RAM (FeRAM), phase change RAM (PRAM), resistive RAM(RRAM), nanotube RRAM, polymer RAM (PoRAM), nano floating gate Memory(NFGM), holographic memory, molecular electronic memory device), insulator resistance change memory, dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and providing the instructions or software and any associated data, data files, and data structures to a processor or computer so that the processor or computer can execute the instructions. In an example, the instructions or software and any associated data, data files, and data structures are distributed over network-coupled computer systems so that the instructions and software and any associated data, data files, and data structures are stored, accessed, and executed in a distributed fashion by the one or more processors or computers.

The invention is defined by the appended claims.


**Claims**

1.  A processor-implemented method of operating an electronic device (101), the method comprising:

    generating (510) two-dimensional (2D) feature point information (121, 123, 125) as sets of pixels on a 2D probability map obtained from a surrounding image acquired by a capturing device (230) mounted on a moving object (1000), each set corresponding to a different landmark (111, 113, 115);
    obtaining (520) landmark-based three-dimensional (3D) feature point information (131, 133, 135) from high-definition (HD) map data of a vicinity of the moving object (1000);
    converting (530) the 3D feature point information (131, 133, 135) of the HD map data to 2D;
    determining (540) a similarity between the converted feature point information of the HD map data and the feature point information (121, 123, 125) of the surrounding image ; and
    estimating (550) a position of the moving object (1000) based on the similarity;
    wherein the obtaining (520) of the 3D feature point information (131, 133, 135) from the HD map data of the vicinity of the moving object (1000) comprises:

    receiving the 3D feature point information on a global domain for a landmark in the vicinity of the moving object (1000) from a HD map database (210) based on position information of the moving object (1000); and
    converting the 3D feature point information on the global domain to a local domain for the capturing device (230),
    wherein the converting (530) of the 3D feature point information (131, 133, 135) of the HD map data comprises projecting the 3D feature point information (131, 133, 135) of the HD map data onto the 2D probability map obtained from the surrounding image, based on perspective mapping, and
    wherein the determining (540) of the similarity between the feature point information (121, 123, 125) of the surrounding image and the feature point information (131, 133, 135) of the HD map data comprises:

    summing (610) probabilities of the feature point information (131, 133, 135) of the HD map data corresponding to each landmark (111, 113, 115), in the probability map obtained from the surrounding image; and
    calculating (620) the similarity by multiplying summed probabilities corresponding to each landmark (111, 113, 115).

2. The method of claim 1, wherein the 2D feature point information (121, 123, 125) of the surrounding image is obtained according to a landmark (111, 113, 115), based on deep neural network (DNN)-based semantic segmentation.

3. The method of any one of the previous claims, wherein the estimating (550) of the position of the moving object (1000) based on the similarity comprises updating a result of estimating (550) the position of the moving object (1000) according to a particle filter or a maximum likelihood (ML) optimization scheme, based on the similarity.

4. The method of any one of the previous claims, wherein the moving object (1000) is an autonomous vehicle or a vehicle supporting advanced driver-assistance systems (ADAS).

5. The method of any one of the previous claims, wherein each landmark (111, 113, 115) comprises any one or any combination of a white lane line (113), a yellow lane line (111), a crosswalk, a speed bump, a traffic light, and a traffic sign.

6. A non-transitory computer-readable storage medium (130) storing instructions that, when executed by a processor (120), cause the processor (120) to perform the operating method of any one of the previous claims.

7. An electronic device (101), comprising:

   a communication module (190) configured to receive high-definition (HD) map data of a vicinity of a moving object (1000) and a surrounding image acquired by a capturing device (230) mounted on the moving object (1000);
   a memory (130) configured to store computer-executable instructions, the HD map data, and the surrounding image; and
   a processor (120) configured to execute the computer-executable instructions to configure the processor (120) to:

      generate (510) two-dimensional (2D) feature point information (121, 123, 125) as sets of pixels on a 2D probability map obtained from the surrounding image, each set corresponding to a different landmark (111, 113, 115),
      obtain (520) landmark-based three-dimensional (3D) feature point information (131, 133, 135) from the HD map data,
      convert (530) the 3D feature point information (131, 133, 135) of the HD map data to 2D,
      determine (540) a similarity between the converted feature point information of the HD map data and the feature point information (121, 123, 125) of the surrounding image, and
      estimate (550) a position of the moving object (1000) based on the similarity;
      wherein the processor (120) is further configured to:

         receive the 3D feature point information on a global domain for a landmark in the vicinity of the moving object (1000) from a HD map database (210) based on position information of the moving object (1000); and
         convert the 3D feature point information on the global domain to a local domain for the capturing device (230),
         wherein the processor (120) is further configured to:

            project the 3D feature point information (131, 133, 135) of the HD map data onto a 2D probability map obtained from the surrounding image, based on perspective mapping, and
            wherein the processor (120) is further configured to:

               sum (610) probabilities of the feature point information (131, 133, 135) of the HD map data corresponding to each landmark (111, 113, 115), in the probability map obtained from the surrounding image, and
               calculate (620) the similarity by multiplying summed probabilities corresponding to each landmark (111, 113, 115).

8. The electronic device of claim 7, wherein the processor (120) is further configured to:
   update a result of estimating (550) the position of the moving object (1000) according to a particle filter or a maximum likelihood (ML) optimization scheme, based on the similarity.

**9.** The electronic device of claim 7 or 8, wherein the moving object (1000) is an autonomous vehicle or a vehicle supporting advanced driver-assistance systems (ADAS).

**10.** The electronic device of any one of claims 7-9, wherein each landmark (111, 113, 115) comprises any one or any combination of a white lane line (113), a yellow lane line (111), a crosswalk, a speed bump, a traffic light, and a traffic sign.


**Patentansprüche**

**1.** Prozessorimplementiertes Verfahren zum Betreiben einer elektronischen Vorrichtung (101), wobei das Verfahren Folgendes umfasst:

Erzeugen (510) von zweidimensionalen (2D) Merkmalspunktinformationen (121, 123, 125) als Pixelsätze auf einer 2D-Wahrscheinlichkeitskarte, die aus einem Umgebungsbild erhalten wurde, das von einem auf einem sich bewegenden Objekt (1000) montierten Aufnahmegerät (230) aufgenommen wurde, wobei jeder Satz einem jeweiligen Orientierungspunkt (111, 113, 115) entspricht;
Erhalten (520) von orientierungspunktbasierten dreidimensionalen (3D) Merkmalspunktinformationen (131, 133, 135) aus hochauflösenden (HD) Kartendaten einer Umgebung des sich bewegenden Objekts (1000);
Konvertieren (530) der 3D-Merkmalspunktinformationen (131, 133, 135) der HD-Kartendaten in 2D;
Bestimmen (540) einer Ähnlichkeit zwischen den konvertierten Merkmalspunktinformationen der HD-Kartendaten und den Merkmalspunktinformationen (121, 123, 125) des Umgebungsbildes; und
Schätzen (550) einer Position des sich bewegenden Objekts (1000) basierend auf der Ähnlichkeit,
wobei das Erhalten (520) der 3D-Merkmalspunktinformationen (131, 133, 135) aus den HD-Kartendaten der Umgebung des sich bewegenden Objekts (1000) Folgendes umfasst:

Empfangen der 3D-Merkmalspunktinformationen in einer globalen Domäne für einen Orientierungspunkt in der Umgebung des sich bewegenden Objekts (1000) aus einer HD-Kartendatenbank (210) basierend auf Positionsinformationen des sich bewegenden Objekts (1000), und
Konvertieren der 3D-Merkmalspunktinformationen in der globalen Domäne in eine lokale Domäne für das Aufnahmegerät (230),
wobei das Konvertieren (530) der 3D-Merkmalspunktinformationen (131, 133, 135) der HD-Kartendaten das Projizieren der 3D-Merkmalspunktinformationen (131, 133, 135) der HD-Kartendaten auf eine aus dem Umgebungsbild erhaltene 2D-Wahrscheinlichkeitskarte umfasst, basierend auf einer perspektivischen Abbildung (sog. "perspective mapping"), und
wobei das Bestimmen (540) der Ähnlichkeit zwischen den Merkmalspunktinformationen (121, 123, 125) des Umgebungsbildes und den Merkmalspunktinformationen (131, 133, 135) der HD-Kartendaten Folgendes umfasst:

Summieren (610) der Wahrscheinlichkeiten, dass die Merkmalspunktinformationen (131, 133, 135) der HD-Kartendaten jedem Orientierungspunkt (111, 113, 115) entsprechen, in einer aus dem Umgebungsbild erhaltenen Wahrscheinlichkeitskarte; und
Berechnen (620) der Ähnlichkeit durch Multiplikation der summierten Wahrscheinlichkeiten, die jedem Orientierungspunkt (111, 113, 115) entsprechen.

**2.** Verfahren nach Anspruch 1, wobei die 2D-Merkmalspunktinformationen (121, 123, 125) des Umgebungsbildes entsprechend einem Orientierungspunkt (111, 113, 115) auf der Grundlage einer auf einem tiefen neuronalen Netzwerk (DNN, Deep Neural Network) basierten semantischen Segmentierung erhalten werden.

**3.** Verfahren nach einem der vorhergehenden Ansprüche, wobei das Schätzen (550) der Position des sich bewegenden Objekts (1000) basierend auf der Ähnlichkeit das Aktualisieren eines Ergebnisses des Schätzens (550) der Position des sich bewegenden Objekts (1000) gemäß einem Partikelfilter oder einem Maximum-Likelihood-(ML)-Optimierungsschema basierend auf der Ähnlichkeit umfasst.

**4.** Verfahren nach einem der vorhergehenden Ansprüche, wobei das sich bewegende Objekt (1000) ein autonomes Fahrzeug oder ein Fahrzeug ist, das Fahrerassistenzsysteme (ADAS, Advanced Driver-Assistance Systems) unterstützt.

5. Verfahren nach einem der vorhergehenden Ansprüche, wobei jeder Orientierungspunkt (111, 113, 115) eine weiße Fahrbahnmarkierung (113), eine gelbe Fahrbahnmarkierung (111), einen Zebrastreifen, eine Bremsschwelle, eine Ampel oder ein Verkehrszeichen oder eine beliebige Kombination davon umfasst.

6. Nichtflüchtiges computerlesbares Speichermedium (130), auf dem Anweisungen gespeichert sind, die, wenn sie von einem Prozessor (120) ausgeführt werden, den Prozessor (120) veranlassen, das Verfahren nach einem der vorhergehenden Ansprüche durchzuführen.

7. Elektronische Vorrichtung (101), umfassend:

ein Kommunikationsmodul (190), das dazu konfiguriert ist, hochauflösende (HD) Kartendaten einer Umgebung eines sich bewegenden Objekts (1000) und ein Umgebungsbild zu empfangen, das von einem auf dem sich bewegenden Objekt (1000) montierten Aufnahmegerät (230) aufgenommen wurde;
einen Speicher (130), der zum Speichern computerausführbarer Anweisungen, der HD-Kartendaten und des Umgebungsbildes konfiguriert ist; und
einen Prozessor (120), der zum Ausführen der computerausführbaren Anweisungen konfiguriert ist, um den Prozessor (120) zum Folgenden zu konfigurieren:

Erzeugen (510) von zweidimensionalen (2D) Merkmalspunktinformationen (121, 123, 125) als Pixelsätze auf einer 2D-Wahrscheinlichkeitskarte, die aus dem Umgebungsbild erhalten wurde, wobei jeder Satz einem jeweiligen Orientierungspunkt (111, 113, 115) entspricht;
Erhalten (520) von orientierungspunktbasierten dreidimensionalen (3D) Merkmalspunktinformationen (131, 133, 135) aus den HD-Kartendaten;
Konvertieren (530) der 3D-Merkmalspunktinformationen (131, 133, 135) der HD-Kartendaten in 2D;
Bestimmen (540) einer Ähnlichkeit zwischen den konvertierten Merkmalspunktinformationen der HD-Kartendaten und den Merkmalspunktinformationen (121, 123, 125) des Umgebungsbildes; und
Schätzen (550) einer Position des sich bewegenden Objekts (1000) basierend auf der Ähnlichkeit;
wobei der Prozessor (120) ferner zu Folgendem konfiguriert ist:

Empfangen der 3D-Merkmalspunktinformationen in einer globalen Domäne für einen Orientierungspunkt in der Umgebung des sich bewegenden Objekts (1000) aus einer HD-Kartendatenbank (210) basierend auf Positionsinformationen des sich bewegenden Objekts (1000); und
Konvertieren der 3D-Merkmalspunktinformationen in der globalen Domäne in eine lokale Domäne für das Aufnahmegerät (230),
wobei der Prozessor (120) ferner zu Folgendem konfiguriert ist:

Projizieren der 3D-Merkmalspunktinformationen (131, 133, 135) der HD-Kartendaten auf eine aus dem Umgebungsbild erhaltene 2D-Wahrscheinlichkeitskarte, basierend auf einer perspektivischen Abbildung (sog. "perspective mapping"), und
wobei der Prozessor (120) ferner zu Folgendem konfiguriert ist:

Summieren (610) der Wahrscheinlichkeiten, dass die Merkmalspunktinformationen (131, 133, 135) der HD-Kartendaten jedem Orientierungspunkt (111, 113, 115) entsprechen, in einer aus dem Umgebungsbild erhaltenen Wahrscheinlichkeitskarte, und
Berechnen (620) der Ähnlichkeit durch Multiplikation der summierten Wahrscheinlichkeiten, die jedem Orientierungspunkt (111, 113, 115) entsprechen.

8. Elektronische Vorrichtung nach Anspruch 7, wobei der Prozessor (120) ferner zu Folgendem konfiguriert ist:
Aktualisieren eines Ergebnisses des Schätzens (550) der Position des sich bewegenden Objekts (1000) gemäß einem Partikelfilter oder einem Maximum-Likelihood-(ML)-Optimierungsschema, basierend auf der Ähnlichkeit.

9. Elektronische Vorrichtung nach Anspruch 7 oder 8, wobei das sich bewegende Objekt (1000) ein autonomes Fahrzeug oder ein Fahrzeug ist, das Fahrerassistenzsysteme (ADAS, Advanced Driver-Assistance Systems) unterstützt.

10. Elektronische Vorrichtung nach einem der Ansprüche 7 bis 9, wobei jeder Orientierungspunkt (111, 113, 115) eine weiße Fahrbahnmarkierung (113), eine gelbe Fahrbahnmarkierung (111), einen Zebrastreifen, eine Bremsschwelle, eine Ampel oder ein Verkehrszeichen oder eine beliebige Kombination davon umfasst.

**Revendications**

1. Procédé d'exploitation d'un dispositif électronique (101) mis en œuvre par un processeur, le procédé comprenant les étapes consistant à :

   générer (510) des informations de points caractéristiques bidimensionnelles (2D) (121, 123, 125) sous la forme d'ensembles de pixels sur une carte de probabilité 2D obtenue à partir d'une image de l'environnement acquise par un dispositif de prise de vues (230) monté sur un objet en mouvement (1000), chaque ensemble correspondant à un point de repère différent (111, 113, 115),
   obtenir (520) des informations de points caractéristiques tridimensionnelles (3D) fondées sur des points de repère (131, 133, 135) à partir de données cartographiques haute définition (HD) du voisinage de l'objet en mouvement (1000),
   convertir (530) les informations de points caractéristiques 3D (131, 133, 135) des données cartographiques HD en 2D,
   déterminer (540) une similarité entre les informations de points caractéristiques converties des données cartographiques HD et les informations de points caractéristiques (121, 123, 125) de l'image de l'environnement, et
   estimer (550) la position de l'objet en mouvement (1000) compte tenu de la similarité ;
   ladite obtention (520) des informations de points caractéristiques 3D (131, 133, 135) à partir des données cartographiques HD du voisinage de l'objet en mouvement (1000) comprenant :

   la réception des informations de points caractéristiques 3D sur un domaine global relativement à un point de repère situé au voisinage de l'objet en mouvement (1000) à partir d'une base de données cartographiques HD (210) compte tenu des informations de position de l'objet en mouvement (1000), et
   la conversion des informations de points caractéristiques 3D sur le domaine global en un domaine local pour le dispositif de prise de vues (230) ;
   ladite conversion (530) des informations de points caractéristiques 3D (131, 133, 135) des données cartographiques HD comprend la projection des informations de points caractéristiques 3D (131, 133, 135) des données cartographiques HD sur une carte de probabilité 2D obtenue à partir de l'image de l'environnement, compte tenu d'une transformation dite de « perspective mapping », et ladite détermination (540) de la similarité entre les informations de points caractéristiques (121, 123, 125) de l'image de l'environnement et les informations de points caractéristiques (131, 133, 135) des données cartographiques HD comprend :

   le calcul de la somme (610) des probabilités que les informations de points caractéristiques (131, 133, 135) des données cartographiques HD correspondent à chaque point de repère (111, 113, 115), dans une carte de probabilité obtenue à partir de l'image de l'environnement, et
   le calcul (620) de la similarité par multiplication des probabilités sommées correspondant à chaque point de repère (111, 113, 115).

2. Procédé selon la revendication 1, dans lequel les informations de points caractéristiques 2D (121, 123, 125) de l'image de l'environnement sont obtenues selon un point de repère (111, 113, 115), compte tenu d'une segmentation sémantique reposant sur un réseau neuronal profond (RNP).

3. Procédé selon l'une quelconque des revendications précédentes, dans lequel l'estimation (550) de la position de l'objet en mouvement (1000) compte tenu de la similarité comprend l'actualisation d'un résultat de l'estimation (550) de la position de l'objet en mouvement (1000) au moyen d'un filtre à particules ou d'un schéma d'optimisation par maximum de vraisemblance, compte tenu de la similarité.

4. Procédé selon l'une quelconque des revendications précédentes, dans lequel l'objet en mouvement (1000) est un véhicule autonome ou un véhicule prenant en charge des systèmes avancés d'aide à la conduite (ADAS, advanced driver-assistance systems).

5. Procédé selon l'une quelconque des revendications précédentes, dans lequel chaque point de repère (111, 113, 115) comprend l'un quelconque ou une combinaison quelconque des éléments suivants : une ligne de marquage de voie blanche (113), une ligne de marquage de voie jaune (111), un passage piéton, un ralentisseur, un feu de circulation et un panneau de signalisation.

6. Support de stockage (130) non transitoire lisible par ordinateur sur lequel sont stockées des instructions qui, lorsqu'elles sont exécutées par un processeur (120), amènent le processeur (120) à mettre en œuvre le procédé d'exploitation selon l'une quelconque des revendications précédentes.

7. Dispositif électronique (101), comprenant :

un module de communication (190) configuré pour recevoir des données cartographiques haute définition (HD) du voisinage d'un objet en mouvement (1000) et une image de l'environnement acquise par un dispositif de prise de vues (230) monté sur l'objet en mouvement (1000),
une mémoire (130) configurée pour le stockage d'instructions exécutables par ordinateur, des données cartographiques HD et de l'image de l'environnement, et
un processeur (120) configuré pour exécuter les instructions exécutables par ordinateur afin de configurer le processeur (120) pour :

générer (510) des informations de points caractéristiques bidimensionnelles (2D) (121, 123, 125) sous la forme d'ensembles de pixels sur une carte de probabilité 2D obtenue à partir de l'image de l'environnement, chaque ensemble correspondant à un point de repère différent (111, 113, 115),
obtenir (520) des informations de points caractéristiques tridimensionnelles (3D) fondées sur des points de repère (131, 133, 135) à partir des données cartographiques HD,
convertir (530) les informations de points caractéristiques 3D (131, 133, 135) des données cartographiques HD en 2D,
déterminer (540) une similarité entre les informations de points caractéristiques converties des données cartographiques HD et les informations de points caractéristiques (121, 123, 125) de l'image de l'environnement, et
estimer (550) la position de l'objet en mouvement (1000) compte tenu de la similarité ;
ledit processeur (120) étant en outre configuré pour :

recevoir les informations de points caractéristiques 3D sur un domaine global relativement à un point de repère situé au voisinage de l'objet en mouvement (1000) à partir d'une base de données cartographiques HD (210) compte tenu des informations de position de l'objet en mouvement (1000), et
convertir les informations de points caractéristiques 3D sur le domaine global en un domaine local pour le dispositif de prise de vues (230) ;
ledit processeur (120) étant en outre configuré pour :

projeter les informations des points caractéristiques 3D (131, 133, 135) des données cartographiques HD sur une carte de probabilité 2D obtenue à partir de l'image de l'environnement, compte tenu d'une transformation dite de « perspective mapping » ; et
ledit processeur (120) étant en outre configuré pour :

calculer la somme (610) des probabilités que les informations de points caractéristiques (131, 133, 135) des données cartographiques HD correspondent à chaque point de repère (111, 113, 115), dans une carte de probabilité obtenue à partir de l'image de l'environnement, et
calculer (620) la similarité en multipliant les probabilités sommées correspondant à chaque point de repère (111, 113, 115).

8. Dispositif électronique selon la revendication 7, dans lequel le processeur (120) est en outre configuré pour : actualiser un résultat de l'estimation (550) de la position de l'objet en mouvement (1000) au moyen d'un filtre à particules ou d'un schéma d'optimisation par maximum de vraisemblance, compte tenu de la similarité.

9. Dispositif électronique selon la revendication 7 ou 8, dans lequel l'objet en mouvement (1000) est un véhicule autonome ou un véhicule prenant en charge des systèmes avancés d'aide à la conduite (ADAS, advanced driver-assistance systems).

10. Dispositif électronique selon l'une quelconque des revendications 7 à 9, dans lequel chaque point de repère (111, 113, 115) comprend l'un quelconque ou une combinaison quelconque des éléments suivants : une ligne de marquage de voie blanche (113), une ligne de marquage de voie jaune (111), un passage piéton, un ralentisseur, un feu de circulation et un panneau de signalisation.

FIG. 1A

FIG. 1B

FIG. 1C

FIG. 2

★ Projected feature point information

FIG. 3A

340

343

353

★ Projected stop line information

360

361

361

371

371

★ Projected lane line information

FIG. 3B

FIG. 4A

FIG. 4B

Start

510

Obtain 2D feature point information in form of probability
map from surrounding image of moving object

520

Obtain 3D feature point information from
HD map data of vicinity of moving object

530

Convert dimension of one of 2D feature point information and
3D feature point information to another dimension

540

Calculate similarity between feature point information of surrounding image
and feature point information of HD map data

550

Estimate position of moving object based on likelihood

End

FIG. 5

From 530

540

610

Sum probabilities of feature point information of HD map data corresponding to each landmark, in probability map obtained from surrounding image

620

Calculate similarity by multiplying summed probabilities corresponding to respective landmarks

To 550

FIG. 6

Start

710

Obtain 2D feature point information in form of probability map
from surrounding image of moving object

720

Obtain 3D feature point information from HD map data of vicinity of moving object

730

Predict positions of plurality of particles corresponding to
candidate positions of moving object

740

Project, for each of position of plurality of particles,
3D feature information onto probability map

750

Calculate, for each of positions of plurality of particles,
similarity between 3D feature point information projected onto probability map
and 2D feature point information of probability map

760

Estimate position of moving object by rearranging plurality of
particles based on similarity

End

FIG. 7

From 750

No ⟋760

⟋810

Set weights for respective positions of plurality of particles according to similarity

⟋820

Rearrange plurality of particles according to weights

⟋830

Estimate position of moving object by calculating mean value of rearranged particles

To End

FIG. 8

System for estimating position of moving object 900

Wheel
Odometry
910

IMU
920 →

Inertial Navigation
System
930

Extended
Kalman
Filter
990

Position
Velocity
Attitude

902

Position,
Attitude

Longitudinal, Lateral,
Attitude errors

901

HD Map
940 →

Local Landmark
Extraction
950

Camera
960 →

DNN Based
Semantic Segmentation
970

Particle
Filter
980

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10546387 B2

**Non-patent literature cited in the description**

- **CHENGCHENG GUO et al.** Coarse-to-fine Semantic Localization with HD Map for Autonomous Driving in Structural Scenes. *arXiv:2107.02557v1*